# EUROPÄISCHE PATENTSCHRIFT

(11) **EP 1 299 432 B1**
(45) Veröffentlichungstag und Bekanntmachung des Hinweises auf die Patenterteilung: **14.09.2005**
(21) Anmeldenummer: 01960312.5
(22) Anmeldetag: 15.06.2001
(51) Int. Cl.: C08F 20/12, C09J 133/00

(54) **VERFAHREN ZUR HERSTELLUNG VON POLYACRYLATEN**
METHOD FOR PRODUCING POLYACRYLATES
PROCEDE DE FABRICATION DE POLYACRYLATES

(30) Priorität: 20.06.2000 DE 10030217
(43) Veröffentlichungstag der Anmeldung: 09.04.2003
(73) Patentinhaber: tesa AG, 20253 Hamburg (DE)
(72) Erfinder: HUSEMANN, Marc, 22605 Hamburg (DE); LOSCH, Martin, 24306 Plön (DE); ZÖLLNER, Stephan, 22043 Hamburg (DE)
(86) Internationale Anmeldenummer: PCT/EP2001/006734
(87) Internationale Veröffentlichungsnummer: WO 2001/098383

(56) Entgegenhaltungen:
- EP-A- 0 971 010
- WO-A-98/01478
- FR-A- 2 249 898

## Beschreibung

Die Erfindung betrifft ein Verfahren zur Herstellung von Polyacrylaten mit einem mittleren Molekulargewicht zwischen 250.000 g/mol und 1.000.000 g/mol und mit enger Molekulargewichtsverteilung.

Im Bereich der Haftklebemassen besteht aufgrund technologischer Weiterentwicklungen im Beschichtungsverfahren ein fortlaufender Bedarf für Neuentwicklungen. In der Industrie sind Heißschmelzverfahren (Hotmeltverfahren) mit lösungsmittelfreier Beschichtungstechnik zur Herstellung von Haftklebemassen von anwachsender Bedeutung, da die Umweltauflagen immer größer werden und die Preise für Lösungsmittel steigen. Hotmeltverfahren sind bereits für SIS-Klebemassen Stand der Technik. Dagegen werden Acrylathaftklebemassen immer noch zu großen Anteilen aus der Lösung verarbeitet. Hier bereitet ein zu hohes mittleres Molekulargewicht immer noch Probleme, da es zum einen zwar essentiell für eine hohe Scherfestigkeit ist, zum anderen aber die Fließviskosität stark ansteigen läßt, so daß sich Acrylathotmelts mit einem mittleren Molekulargewicht von > 1.000.000 g/mol nur schwer aus der Schmelze verarbeiten lassen.
Dagegen ist die Umsetzung von niedermolekularen Acrylathotmelts als Haftschmelzklebemassen bereits gelungen (BASF AG, z.B. UV 203 AC Resins). Hier werden Benzophenon- oder Acetophenonderivate als acrylierter Photoinitiator in die Acrylatpolymerkette eingebaut und anschließend mit UV-Strahlung vemetzt [US 5,073,611]. Dennoch ist die erzielbare Scherfestigkeit mit solchen Systemen noch nicht zufriedenstellend, wenn auch die Fließviskosität durch das geringe mittlere Molekulargewicht (≈ 250.000 g/mol) relativ niedrig ist.
Für die Herstellung von höhermolekularen Acrylathaftklebemassen (mittleres Molekulargewicht zwischen 250.000 g/mol und 1.000.000 g/mol) benötigt man spezielle Polymerisationsverfahren. In Substanz kann nicht polymerisiert werden, da ab einem gewissen Zeitpunkt die Fließviskosität zu hoch wird und der Umsatz der Reaktion nur sehr gering ist. Die verbleibenden Restmonomere würden den Hotmeltprozeß stören. Daher werden Acrylatmonomere konventionell in Lösung polymerisiert und dann im Aufkonzentrationsextruder aufkonzentriert [EP 0621 326 B1].

Dennoch bereitet die Aufkonzentration dieser Acrylathaftklebemasse Probleme, da aus umwelttechnischen Gründen häufig Lösungsmittelgemische, wie z.B. Siedegrenzbenzin und Aceton, eingesetzt werden (Stand der Technik). Toluol steht im Verdacht, kanzerogen zu sein, und wird daher nicht mehr eingesetzt. Ein Lösungsmittelgemisch führt im Aufkonzentrationsprozeß zu keinem kontinuierlichen Siedepunkt, so daß das Lösemittel nur sehr schwer auf einen Anteil von unter 0,5 % (Gewichtsprozent bezogen auf das Polymer) entzogen werden kann. Daher versucht man, Acrylate in nur einem Lösemittel und mit einem Regler zu polymerisieren. Der Regler erfüllt die Aufgaben, die Vergelung zu vermeiden, das mittlere Molekulargewicht herabzusetzen, die Exothermie in der Startphase abzufangen, die Molekulargewichtsverteilung herabzusetzen und dennoch einen hohen Umsatz zu gewährleisten.
In der Regel werden als Regler Thiole, Alkohole oder Halogenide, wie z.B. Tetrabromkohlenstoff, eingesetzt [vgl. beispielsweise H.-G. Elias, "Makromoleküle", Hüthig & Wepf Verlag Basel, 5. Auflage, 1990]. Die Verwendung von Halogeniden als Regler nimmt allerdings aus umwelttechnischen Gründen beständig ab. Thiole und Alkohole eignen sich als Regler und setzen - je nach Konzentration - das mittlere Molekulargewicht des Polymers deutlich herab, führen aber zu einer deutlichen Verbreiterung der Molekulargewichtsverteilung. Dies ist für Acrylathaftklebemassen unerwünscht, da Polyacrylate mit zu niedrigem Molekulargewicht die Kohäsion stark herabsetzen und Polyacrylate mit sehr hohem Molekulargewicht die Schmelzviskosität für die Verarbeitung als Hotmelt erschweren.
In den letzten Jahren wurde dagegen ein neues Polymerisationsverfahren entwickelt, welches erlaubt, eine Vielzahl von Polymeren mit sehr enger Molekulargewichtsverteilung herzustellen (Macromolecules, 1999, 32, 5457-5459; WO 98/01478). Die dort beschriebenen Polymere haben jedoch durchweg ein niedriges mittleres Molekulargewicht (< 200.000 g/mol). Weiterhin liegt der Umsatz in allen Fällen deutlich unter 90 %. Sowohl der verbleibende Anteil an Restmonomeren als auch das geringe mittlere Molekulargewicht lassen einen Einsatz im Hotmeltprozeß und die Verwendung als Haftklebemassen nicht zu.

Aufgabe der Erfindung ist es, ein Verfahren zur Herstellung von Polyacrylatmassen mit ausreichend hohen mittleren Molekulargewichten zur Verfügung zu stellen, so daß diese als Haftklebemassen verwendet werden können, wobei jedoch die Verarbeitbarkeit im Heißschmelzprozeß gewährleistet bleiben soll, indem ein hoher Umsatz der Polymerisation bei einer engen Molekulargewichtsverteilung erzielt wird.

Gelöst wird die Aufgabe überraschend und für den Fachmann nicht vorhersehbar durch ein Verfahren, wie es im Hauptanspruch beschrieben ist. Die Unteransprüche beschreiben Weiterentwicklungen dieses Verfahrens sowie Anwendungen der nach diesem Verfahren hergestellten Polyacrylate.

Dementsprechend betrifft der Anspruch 1 ein Verfahren zur Herstellung von Polyacrylaten, bei welchem das Monomerengemisch zur Herstellung der Polyacrylate zu mindestens 70 Gew.-% aus mindestens einem acrylischen Monomeren der allgemeinen Formel 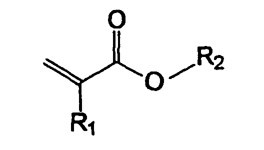 besteht, wobei R₁ = H oder CH₃ und R₂ = H oder eine Alkylkette mit 1 - 20 C-Atomen ist, die Monomere bei Anwesenheit zumindest eines radikalischen Initiators über eine freie radikalische Polymerisation mit zumindest einem Thioester als Polymerisationsregler polymerisiert werden, die Polymerisation derart durchgeführt wird, daß das mittlere Molekulargewicht der Polyacrylate im Bereich von 250.000 g/mol bis zu 1.000.000 g/mol liegt und die Molekulargewichtsverteilung M_{w}/Mₙ < 4 ist.

Als radikalische Initiatoren für die freie radikalische Polymerisation können alle für Acrylate hierfür bekannten üblichen Initiatoren eingesetzt werden. Die Produktion von C-zentrierten Radikalen ist im Houben Weyl, Methoden der Organischen Chemie, Vol. E 19a, S. 60 - 147, beschrieben. Diese Methoden können in Analogie angewendet werden. Beispiele für Radikalquellen sind Peroxide, Hydroperoxide und Azoverbindungen, als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di-t-butylperoxid, Azodiisosäurebutyronitril, Cyclohexylsulfonylacetylperoxid, Diisopropyl-percarbonat, t-Butylperoktoat, Benzpinacol. In einer sehr bevorzugten Variante werden die Initiatoren in mehreren Stufen hinzugegeben, so daß der Umsatz auf über 90 % gesteigert wird. Der in dem Polymer verbleibende Restmonomergehalt kann so auf unter 10 Gew.-% abgesenkt werden; durch einen geringen Restmonomergehalt werden die Eigenschaften des Polyacrylates in Hinblick auf die Weiterverarbeitung im Hotmeltprozeß erheblich verbessert.

Die zu Beginn eingesetzten Initiatoren werden dabei bevorzugt derart gewählt, daß sie eine geringe Tendenz zur Ausbildung von Seitenketten in den Polymeren aufweisen, ihre Pfropfwirksamkeit liegt bevorzugt unter einem Wert von ε < 5 bei der Temperatur des Reaktionsgemisches bei Zugabe des Initiators.
Die absolute Pfropfwirksamkeit (Crosslink-Effizienz) ist definiert als die Zahl der chemischen Seitenkettenbildungen pro 100 Mol-Einheiten an zersetztem Initiator. In Analogie zu van Drumpt und Oosterwijk [Journal of Polymer Science, Polymer Chemistry Edition 14 (1976) 1495 - 1511] läßt sich ein Wert für diese Zahl durch Bestimmung der Dimeren in einer definierten Lösung des Initiators angeben, siehe auch DE 43 40 297 A1:
Eine genau 0,1 molare Lösung des Initiators wird in n-Pentadecan unter He-Atmosphäre zersetzt. Die Reaktionszeit wird so gewählt, daß sie dem Zehnfachen der bei der gewählten Temperatur gegebenen Halbwertszeit des jeweiligen Initiators entspricht. Dadurch ist ein praktisch vollständiger Zerfall des Initiators gewährleistet. Anschließend wird der Anteil an entstandenem dimeren Pentadecan mittels GLC gemessen. Der prozentuale Anteil ε wird als Maß für die Pfropfwirksamkeit angegeben. Üblicherweise wählt man die Reaktionstemperatur so, daß die Halbwertszeit des zu prüfenden Initiators bei dieser Temperatur 15 min beträgt.
Hohe ε-Werte für die Pfropfwirksamkeit bedeuten eine hohe Tendenz des Initiators, bei der Polymerisation Seitenketten zu bilden, kleine ε-Werte resultieren hingegen in bevorzugt linearen Polymeren.

In einer bevorzugten Vorgehensweise des Verfahrens sieht der Verfahrensablauf wie folgt aus:
- Als Reaktionslösung wird eine zumindest 50%ige Lösung der Monomere unter Zusatz des Initiators bzw. der Initiatoren und des Thioesters bzw. der Thioester eingesetzt,
- in einem Temperaturbereich von 50 °C bis 90 °C wird die radikalische Polymerisation durchgeführt,
- während der Polymerisation wird mindestens einmal mit einem Initiator für radikalische Polymerisationen mit geringer Tendenz zur Seitenkettenbildung (Pfropfwirksamkeit ε < 5 bei der aktuellen Reaktionstemperatur) nachinitiiert,
- gegebenenfalls wird die Reaktion durch Verdünnung der Reaktionslösung je nach Viskosität des Polymerisats gesteuert,
- eine kontrollierte Nachinitiierung findet mit bis zu 2 Gew.-%, bezogen auf das Monomerengemisch, eines Initiators mit erhöhter Tendenz zur Seitenkettenbildung (Pfropfwirksamkeit ε > 10 bei der aktuellen Reaktionstemperatur) statt,
- wobei die Polymerisation bis zu einem Umsatz > 90 %, bevorzugt > 95 % durchgeführt wird.

Bevorzugte Initiatoren mit einem geringen ε-Wert (ε < 5) sind solche, deren Radikale wegen ihres geringen Energiegehaltes keine oder nur selten Wasserstoffabstraktion an den Polymerketten verursachen. Bevorzugt werden hier zum Beispiel Azo-Initiatoren wie Azoisobuttersäuredinitril oder dessen Derivate, beispielsweise 2,2-Azobis-(2-methylbutyronitril) (Vazo67, DuPont), verwendet.

Initiatoren mit einer hohen Seitenkettenbildungstendenz (hoher ε-Wert > 10) liefern bereits bei relativ niedrigen Temperaturen hohe Pfropfausbeuten. Besonders bevorzugt werden hier Bis-(4-t-Butylcyclohexyl)peroxidicarbonat (Perkadox 16, Akzo Chemie), Dibenzoylperoxid oder dergleichen eingesetzt.

Die Polymerisation kann in Gegenwart eines organischen Lösungsmittels oder in Gegenwart von Wasser oder in Gemischen aus organischen Lösungsmitteln und/oder Wasser durchgeführt werden. Als Lösemittel für die Polymerisation können alle für radikalische Polymerisationen üblicherweise verwendeten oder geeigneten Lösemittel eingesetzt werden, insbesondere bieten sich Aceton, Essigester, Benzin, Toluol oder beliebige Gemische aus diesen Lösemitteln an.
Bevorzugt wird so wenig Lösungsmittel wie möglich eingesetzt Die Polymerisationszeit beträgt - je nach Umsatz, Temperatur und Initiierung - zwischen 6 und 48 h.
Die hergestellten haftklebenden Polyacrylate haben ein mittleres Molekulargewicht zwischen 250.000 und 1.000.000 g/mol, wobei das mittlere Molekulargewicht durch SEC oder GPC gemessen wird. Die hergestellten (Co)Polymere besitzen generell eine geringere Molekulargewichtsverteilung als die analog mit konventionellen Reglem durchgeführten Polymerisationen. Die Polydispersität kann auf einen Wert von weniger als 4 herabgesetzt werden. Durch die geringe Molekulargewichtsverteilung sinkt die Fließviskosität der Haftklebemasse, und der Schmelzhaftkleber läßt sich bedeutend einfacher als Hotmelt verarbeiten (geringere Temperatur zum Aufschmelzen erforderlich, höherer Durchsatz für die Aufkonzentration).

In einer besonders bevorzugten Variante des erfinderischen Verfahrens werden als Thioester Verbindungen der folgenden allgemeinen Strukturformel 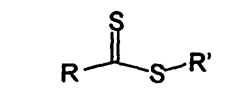 eingesetzt, wobei R und R' unabhängig voneinander gewählt sind und R ein Rest aus einer der Gruppen i) bis iv) und R' ein Rest aus einer der Gruppen i) bis iii) ist
i) C₁-C₁₈-Alkyl-, C₂-C₁₈-Alkenyl-, C₂-C₁₈-Alkinyl-, jeweils linear oder verzweigt; Aryl-, Phenyl-, Benzyl-, aliphatische und aromatische Heterocyclen,
ii) -NH₂, -NH-R¹, -NR¹R², -NH-C(O)-R¹, -NR¹-C(O)-R², -NH-C(S)-R¹, -NR¹-C(S)-R², 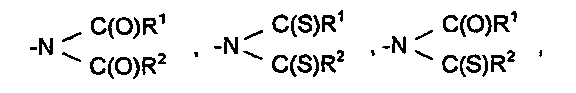 wobei R¹ und R² unabhängig voneinander gewählte Reste aus der Gruppe i) sind
iii) -S-R³, -S-C(S)-R³,
   wobei R³ ein Rest gewählt aus einer der Gruppen i) oder ii) ist,
iv) -O-R³, -O-C(O)-R³,
   wobei R³ ein Rest gewählt aus einer der Gruppen i) oder ii) ist.
Als Regler werden demnach bevorzugt Dithioester und Trithiocarbonate eingesetzt.

Durch das derart gewählte Verfahren lassen sich die Haftklebemassen mit den gewünschten Haftklebeeigenschaften sehr gut herstellen.

In einer vorteilhaften Ausführungsform des erfinderischen Verfahrens werden als Monomere zusätzlich Vinylverbindungen mit einem Anteil bis zu 30 Gew.-% eingesetzt, insbesondere eine oder mehrere Vinylverbindungen gewählt aus der folgenden Gruppe:
Vinylester, Vinylhalogenide, Vinylidenhalogenide, Nitrile ethylenisch ungesättigter Kohlenwassserstoffe.
Als Beispiele für derartige Vinylverbindungen seien hier genannt Vinylacetat, N-Vinylformamid, Vinylpyridine, Acrylamide, Acrylsäure, Ethylvinylether, Vinylchlorid, Vinylidenchlorid, Acrylonitril, Maleinsäureanhydrid, Styrol, ohne sich durch diese Aufzählung unnötig beschränken zu wollen. Weiterhin können alle weiteren Vinylverbindungen, welche unter die oben angeführte Gruppe fallen, eingesetzt werden, aber auch alle anderen Vinylverbindungen, die nicht in die oben genannten Verbindungsklassen fallen.

In einer sehr bevorzugten Vorgehensweise bei dem erfinderischen Verfahren werden als Initiatoren, welche zu Beginn zu der Monomerlösung gegeben werden, solche mit geringer Tendenz zur Ausbildung von Seitenketten gewählt (Pfropfwirksamkeit ε < 5 bei der jeweils vorliegenden Temperatur der Reaktionslösung). Die Initiatoren werden bevorzugt zu einem Anteil von 0,001 - 1 Gew.-%, mehr bevorzugt von 0,05 Gew.-%, bezogen auf das Monomerengemisch, eingesetzt.

In einer weiteren vorteilhaften Variante des erfinderischen Verfahrens wird der Thioester mit einem Gewichts-Anteil von 0,001 % - 5 %, insbesondere von 0,025 % bis 0,25 % eingesetzt Zudem ist es im erfinderischen Sinne sehr günstig, wenn das molare Verhältnis von freiem radikalischen Initiator zu Thioester im Bereich von 50 : 1 und 1 : 1, insbesondere zwischen 10 : 1 und 2 : 1 liegt.

Für die Verwendung der nach dem erfinderischen Verfahren hergestellten Polyacrylate als Haftklebemassen werden die Polyacrylate zur Optimierung optional mit zumindest einem Harz abgemischt. Als zuzusetzende klebrigmachende Harze sind ausnahmslos alle vorbekannten und in der Literatur beschriebenen Klebharte einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9-sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

In einer weiteren vorteilhaften Weiterentwickung werden zu der Haftklebemasse ein oder mehrere Weichmacher, wie z.B. niedermolekulare Polyacrylate, Phthalate, Walöweichmacher oder Weichharze hinzudosiert. In einer bevorzugten Weiterentwicklung werden für Acrylathotmelts Phosphate/Polyphosphate eingesetzt.

Die Acrylathotmelts können des weiteren mit einem oder mehreren Additiven wie Alterungsschutzmitteln, Lichtschutzmitteln, Ozonschutrmitteln, Fettsäuren, Harzen, Keimbildnem, Blähmitteln, Compoundierungsmitteln und/oder Beschleunigem abgemischt sein.
Weiterhin können sie mit einem oder mehreren Füllstoffen wie Fasern, Ruß, Zinkoxid, Titandioxid, Voll- oder Hohlglas(mikro)kugeln, Mikrokugeln aus anderen Materialien, Kieselsäure, Silikaten und Kreide versetzt sein, wobei auch der Zusatz von blockierungsfreien Isocyanaten möglich ist.

Insbesondere für die Verwendung als Haftklebemasse ist es für das erfinderische Verfahren vorteilhaft, wenn das Polyacrylat bevorzugt aus der Lösung auf einen Träger oder auf ein Trägermaterial als Schicht aufgebracht wird.

Eine günstige Weiterentwicklung des erfinderischen Verfahrens liegt vor, wenn die wie im vorhergehenden beschrieben hergestellten Polyacrylate zu einer Polyacrylatmasse aufkonzentriert werden, deren Lösungsmittelgehalt ≤ 2 Gew.-% ist. Dieser Prozeß findet bevorzugt in einem Aufkonzentrationsextruder statt. Die Polyacrylatmasse wird dann in einer günstigen Variante des Verfahrens als Heißschmelzmasse in Form einer Schicht auf einen Träger oder auf ein Trägermaterial aufgetragen.

Für die beiden soeben dargestellten Varianten des erfinderischen Verfahrens werden bevorzugt als Trägermaterialien, beispielsweise für Klebebänder, die dem Fachmann geläufigen und üblichen Materialien, wie Folien (Polyester, PET, PE, PP, BOPP, PVC), Vliese, Schäume, Gewebe und Gewebefolien sowie Trennpapier (Glassine, HDPE, LDPE) verwendet. Diese Aufzählung ist nicht abschließend.

Es ist für die Verwendung als Haftklebemasse besonders günstig, die Polyacrylate nach der Beschichtung auf den Träger oder auf das Trägermaterial zu vernetzen. Zur Herstellung der Haftklebebänder werden die oben beschriebenen Polymere hierzu optional mit Vemetzem abgemischt. Die Vemetzung kann in günstiger Weise thermisch oder durch energiereiche Strahlung, im letzteren Fall insbesondere durch Elektronenstrahlung oder nach Zugabe geeigneter Photoinitiatoren durch ultraviolette Strahlung hervorgerufen werden.
Bevorzugte unter Strahlung vemetzende Substanzen gemäß dem erfinderischen Verfahren sind z.B. bi- oder multifunktionelle Acrylate oder bi- oder multifunktionelle Urethanacrylate, bi- oder multifunktionelle Isocyanate oder bi- oder multifunktionelle Epoxide. Eingesetzt werden können in sehr günstiger Weise ebenfalls Metall-Chelat-Verbindungen. Verwendet werden können hier aber auch alle weiteren, dem Fachmann geläufigen bi- oder multifunktionellen Verbindungen, die in der Lage sind, Polyacrylate zu vernetzen.
Als Photoinitiatoren eignen sich bevorzugt Norrish-Typ I- und -Typ II-Spalter, wobei einige Beispiele für beide Klassen sein können Benzophenon-, Acetophenon-, Benzil-, Benzoin-, Hydroxyalkylphenon-, Phenylcyclohexylketon-, Anthrachinon-, Thioxanthon-, Triazin-, oder Fluorenonderivate, wobei diese Aufzählung keinen Anspruch auf Vollständigkeit besitzt

Im weiteren wird die Verwendung des nach dem erfinderischen Verfahren hergestellten Polyacrytates als Haftklebemasse beansprucht.

Insbesondere ist die Verwendung der wie beschrieben hergestellten Polyacrylathaftklebemasse für ein Klebeband von Vorteil, wobei die Polyacrylathaftklebemasse ein- oder beidseitig auf einem Träger aufgetragenen sein kann.

### Beispiele

### Testmethoden

Folgende Testmethoden wurden angewendet, um die klebtechnischen als auch generelle Eigenschaften der hergestellten Haftklebemassen zu evaluieren.

### 180° Klebkrafttest (Test A)

Ein 20 mm breiter Streifen einer auf Polyester als Schicht aufgetragenen Acrylathaftklebemasse wurde auf Stahlplatten aufgebracht. Der Haftklebestreifen wurde zweimal mit einem 2 kg-Gewicht auf das Substrat aufgedrückt. Das Klebeband wurde anschließend sofort mit 300 mm/min und im 180° Winkel vom Substrat abgezogen. Die Stahlplatten wurden zweimal mit Aceton und einmal mit Isopropanol gewaschen. Die Messergebnisse sind in N/cm angegeben und sind gemittelt aus drei Messungen. Alle Messungen wurden bei Raumtemperatur durchgeführt

### Scherfestigkeit (Test B)

Ein 13 mm breiter Streifen des Klebebandes wurde auf eine glatte Stahloberfläche, die dreimal mit Aceton und einmal mit Isopropanol gereinigt wurde, aufgebracht. Die Auftragsfläche betrug 20 mm * 13 mm (Länge * Breite). Anschließend wurde mit 2 kg Anpreßdruck das Klebeband viermal auf den Stahlträger gedrückt. Bei 80 °C wurde ein 1 kg-Gewicht an dem Klebeband befestigt, bei Raumtemperatur ein 1 kg- oder 2 kg-Gewicht. Die gemessenen Scherstandzeiten sind in Minuten angegeben und entsprechen dem Mittelwert aus drei Messungen.

### Restmonomergehalt (Test C)

Die analytische Bestimmung des Restmonomergehaltes erfolgt durch Flüssigextraktion der verwendeten Haftklebemassen und anschließender Kapillargaschromatographie.

### Rheologie (Test D)

Die Messungen wurden mit dem Gerät Dynamic Stress Rheometer von Rheometrics durchgeführt. Bei 25 °C wurde der Frequenzbereich von 0,1 bis 100 rad/s durchgefahren. Der Temperatursweep wurde bei 10 rad/s in einem Temperaturbereich von -25 °C bis 130 °C gemessen. Alle Experimente wurden mit paralleler Plattenanordnung durchgeführt.

### Gelpermeationschromatographie GPC (Test E)

Die Bestimmung des mittleren Molekulargewichtes M_{w} und der Polydisperistät PD erfolgte durch folgendes Verfahren: Als Eluent wurde THF mit 0,1 Vol.-% Trifluoressigsäure eingesetzt. Die Messung erfolgte bei 25 °C. Als Vorsäule wurde PSS-SDV, 5 µ, 10³ Å, ID 8.0 mm x 50 mm verwendet. Zur Auftrennung wurden die Säulen PSS-SDV, 5 µ, 10³ sowie 10⁵ und 10⁶ mit jeweils ID 8,0 mm x 300 mm eingesetzt. Die Probenkonzentration betrug 4 g/l, die Durchflußmenge 1,0 ml pro Minute. Es wurde gegen PMMA-Standards gemessen.

### Herstellung der Regler

Die Synthese des Dithiobenzoesäurebenzylesters erfolgte analog Houben Weyl, Methoden der Organischen Chemie, 4. Auflage, Bd E5, Teil 1, S. 912 und dort zitierten Literaturstellen.
13,78 g (85,0 mmol) CDI und 10,0 g (81,9 mmol) Benzoesäure werden in 100 ml wasserfreiem DMF 2 h lang bei -10°C unter Feuchtigkeitsausschluß gerührt. Anschließend versetzt man mit 10 ml (85 mmol) Benzylmercaptan und rührt eine Stunde bei -10°C. Nach Zugabe von 100 ml Essigester wird mit gesättigter NaCl-Lösung gewaschen, über Magnesiumssulfat getrocknet, Essigester einrotiert und im Vakuum eingeengt. Die Kristallisation liefert 11,64 g (62 % Ausbeute) farbloser Nadeln des Thioester. Der Thioester wird ohne weitere Aufreinigung zur Herstellung des Dithioesters eingesetzt.

11,32 g (49,6 mmol) Thioester und 20,37 g (50,36 mmol) Lawesson's Reagenz wurden in 150 ml wasserfreiem Toluol 17 h bei 110 °C gerührt. Nachdem das Reaktionsgemisch eine Nacht bei Raumtemtperatur belassen wurde, saugte man den Überschuß von Lawesson's Reagenz ab und rotierte Toluol ein. Mit dem Laufmittel Dichlormethan/Petroleumether (1:1) wurde der Dithioester über eine mit Kieselgel 60 (Fa. Merck) aufgefüllte Trennsäule aufgereinigt. Nach Evaporation des Laufmittels wurden 11,79 g des Dithioesters isoliert (Ausbeute: 97%)
¹H-NMR (CDCl₃) δ (ppm) : 7,94-7,99 (d, 2 H), 7,24-7,49 (m, 8 H), 4,57 (s, 2 H).

Die Synthese des Bis-2,2'-phenylethyl-thiocarbonates erfolgt ausgehend von 2-Phenylethylbromid mit Dischwefelkohlenstoff und Natriumhydroxid nach einer Vorschrift von Synth. Communications 18(13), S. 1531-1536, 1988. Ausbeute nach Destillation: 72 %. ¹H-NMR (CDCl₃) δ (ppm) : 7,20-7,40 (m, 10 H), 1,53, 1,59 (2 x d, 6 H), 3,71, 381 (2 x m, 2 H).

### Herstellung der Beispiele

### Beispiel 1

Ein für radikalische Polymerisationen konventioneller 2 L-Glasreaktor wurde mit 4 g Acrylsäure, 4 g Maleinsäureanhydrid, 32 g N-tert.-Butylacrylamid, 180 g 2-Ethylhexylacrylat, 180 g n-Butylacrylat, 150 g Aceton und 0,2 g Dithiobenzoesäurebenzylester befüllt. Nach 45 Minuten Durchleiten mit Stickstoffgas unter Rühren wurde der Reaktor auf 58 °C hochgeheizt, anschließend wurden 0,2 g Azoisobutyronitril (AIBN) hinzugegeben. Nach einer Stunde Reaktionszeit wurden 0,2 g Vazo 52™ (Fa DuPont), nach 1,30 h 0,4 g Vazo 52™ und nach 2 h 0,6 g Vazo 52™ hinzugeben. Nach 2,5 h Reaktionszeit wurden wiederum 0,2 g Azoisobutyronitril (AIBN) hinzugegeben. Nach 4 h verdünnte man mit 150 g Aceton. Nach 24 und nach 36 erfolgte eine Zugabe von jeweils 0,4 g Perkadox 16™ (Fa. Akzo). Nach 48 h Reaktionszeit wurde die Polymerisation abgebrochen und auf Raumtemperatur abgekühlt. Das Polymerisat wurde mit den Testmethoden C und E analysiert.

### Beispiel 2 (Referenz)

Ein für radikalische Polymerisationen konventioneller 2 L-Glasreaktor wurde mit 4 g Acrylsäure, 4 g Maleinsäureanhydrid, 32 g N-tert.-Butylacrylamid, 180 g 2-Ethylhexylacrylat, 180 g n-Butylacrylat und 150 g Aceton/Isopropanol (97:3) befüllt. Nach 45 Minuten Durchleiten mit Stickstoffgas unter Rühren wurde der Reaktor auf 58 °C hochgeheizt, anschließend wurden 0,2 g Azoisobutyronitril (AIBN) hinzugegeben. Nach einer Stunde Reaktionszeit wurden 0,2 g Vazo 52™ (Fa DuPont), nach 1,30 h 0,4 g Vazo 52™ und nach 2 h 0,6 g Vazo 52™ hinzugeben. Nach 2,5 h Reaktionszeit wurden wiederum 0,2 g Azoisobutyronitril (AIBN) hinzugegeben. Nach 4 h verdünnte man mit 150 g Aceton/Isopropanol (97:3). Nach 6 und nach 8 h erfolgte eine Zugabe von jeweils 0,4 g Perkadox 16™ (Fa. Akzo). Nach 12 h Reaktionszeit wurde die Polymerisation abgebrochen und auf Raumtemperatur abgekühlt. Das Polymerisat wurde mit den Testmethoden C und E analysiert.

### Beispiel 3 (Referenz)

Ein für radikalische Polymerisationen konventioneller 2 L-Glasreaktor wurde mit 4 g Acrylsäure, 4 g Maleinsäureanhydrid, 32 g N-tert.-Butylacrylamid, 180 g 2-Ethylhexylacrylat, 180 g n-Butylacrylat und 150 g Aceton befüllt. Nach 45 Minuten Durchleiten mit Stickstoffgas unter Rühren wurde der Reaktor auf 58 °C hochgeheizt, anschließend wurden 0,2 g Azoisobutyronitril (AIBN) hinzugegeben. Nach einer Stunde Reaktionszeit wurden 0,2 g Vazo 52™ (Fa DuPont), nach 1,30 h 0,4 g Vazo 52™ und nach 2 h 0,6 g Vazo 52™ hinzugeben. Nach 2,5 h Reaktionszeit wurden wiederum 0,2 g Azoisobutyronitril (AIBN) hinzugegeben. Nach 4 h vergelte der Ansatz und die Polymerisation wurde abgebrochen.

### Beispiel 4

Ein für radikalische Polymerisationen konventioneller 2 L-Glasreaktor wurde mit 4 g Acrylsäure, 4 g Maleinsäureanhydrid, 32 g N-tert.-Butylacrylamid, 180 g 2-Ethylhexylacrylat, 180 g n-Butylacrylat, 150 g Aceton und 0,5 g Dodecanthiol befüllt. Nach 45 Minuten Durchleiten mit Stickstoffgas unter Rühren wurde der Reaktor auf 58 °C hochgeheizt, anschließend wurden 0,2 g Azoisobutyronitril (AIBN) hinzugegeben. Nach einer Stunde Reaktionszeit wurden 0,2 g Vazo 52™ (Fa DuPont), nach 1,30 h 0,4 g Vazo 52™ und nach 2 h 0,6 g Vazo 52™ hinzugeben. Nach 2,5 h Reaktionszeit wurden wiederum 0,2 g Azoisobutyronitril (AIBN) hinzugegeben. Nach 4 h verdünnte man mit 150 g Aceton. Nach 24 und nach 36 erfolgte eine Zugabe von jeweils 0,4 g Perkadox 16™ (Fa. Akzo). Nach 48 h Reaktionszeit wurde die Polymerisation abgebrochen und auf Raumtemperatur abgekühlt. Das Polymerisat wurde mit den Testmethoden C und E analysiert.

### Beispiel 5

Ein für radikalische Polymerisationen konventioneller 2 L-Glasreaktor wurde mit 4 g Acrylsäure, 4 g Maleinsäureanhydrid, 32 g N-tert.-Butylacrylamid, 180 g 2-Ethylhexylacrylat, 180 g n-Butylacrylat, 150 g Aceton und 0,6 g Dithioessigsäureethylester befüllt. Nach 45 Minuten Durchleiten mit Stickstoffgas unter Rühren wurde der Reaktor auf 58 °C hochgeheizt, anschließend wurden 0,2 g Azoisobutyronitril (AIBN) hinzugegeben. Nach einer Stunde Reaktionszeit wurden 0,2 g Vazo 52™ (Fa DuPont), nach 1,30 h 0,4 g Vazo 52™ und nach 2 h 0,6 g Vazo 52™ hinzugeben. Nach 2,5 h Reaktionszeit wurden wiederum 0,2 g Azoisobutyronitril (AIBN) hinzugegeben. Nach 4 h verdünnte man mit 150 g Aceton. Nach 24 und nach 36 erfolgte eine Zugabe von jeweils 0,4 g Perkadox 16™ (Fa. Akzo). Nach 48 h Reaktionszeit wurde die Polymerisation abgebrochen und auf Raumtemperatur abgekühlt. Das Polymerisat wurde mit den Testmethoden C und E analysiert.

### Beispiel 6

Ein für radikalische Polymerisationen konventioneller 2 L-Glasreaktor wurde mit 4 g Acrylsäure, 4 g Maleinsäureanhydrid, 32 g N-tert.-Butylacrylamid, 180 g 2-Ethylhexylacrylat, 180 g n-Butylacrylat, 150 g Aceton und 0,4 g Bis-2,2'-phenylethyl-thiocarbonat befüllt. Nach 45 Minuten Durchleiten mit Stickstoffgas unter Rühren wurde der Reaktor auf 58 °C hochgeheizt, anschließend wurden 0,2 g Azoisobutyronitril (AIBN) hinzugegeben. Nach einer Stunde Reaktionszeit wurden 0,2 g Vazo 52™ (Fa DuPont), nach 1,30 h 0,4 g Vazo 52™ und nach 2 h 0,6 g Vazo 52™ hinzugeben. Nach 2,5 h Reaktionszeit wurden wiederum 0,2 g Azoisobutyronitril (AIBN) hinzugegeben. Nach 4 h verdünnte man mit 150 g Aceton. Nach 24 und nach 36 erfolgte eine Zugabe von jeweils 0,4 g Perkadox 16™ (Fa. Akzo). Nach 48 h Reaktionszeit wurde die Polymerisation abgebrochen und auf Raumtemperatur abgekühlt. Das Polymerisat wurde mit den Testmethoden C und E analysiert.

### Beispiel 7

Ein für radikalische Polymerisationen konventioneller 2 L-Glasreaktor wurde mit 8 g Acrylsäure, 4 g Methylacrylat, 40 g N-tert.-Butylacrylamid, 348 g 2-Ethylhexylacrylat, 175 g Aceton und 0,2 g Dithiobenzoesäurebenzylester befüllt. Nach 45 Minuten Durchleiten mit Stickstoffgas unter Rühren wurde der Reaktor auf 58 °C hochgeheizt, anschließend wurden 0,2 g Azoisobutyronitril (AIBN) hinzugegeben. Nach einer Stunde Reaktionszeit wurden 0,2 g Vazo 52™ (Fa DuPont), nach 1,30 h 0,4 g Vazo 52™ und nach 2 h 0,6 g Vazo 52™ hinzugeben. Nach 2,5 h Reaktionszeit wurden wiederum 0,2 g Azoisobutyronitril (AIBN) hinzugegeben. Nach 4 h verdünnte man mit 175 g Aceton. Nach 24 und nach 36 erfolgte eine Zugabe von jeweils 0,4 g Perkadox 16™ (Fa. Akzo). Nach 48 h Reaktionszeit wurde die Polymerisation abgebrochen und auf Raumtemperatur abgekühlt. Das Polymerisat wurde mit den Testmethoden C und E analysiert.

### Beispiel 8

Ein für radikalische Polymerisationen konventioneller 2 L-Glasreaktor wurde mit 8 g Acrylsäure, 4 g Methylacrylat, 40 g N-tert.-Butylacrylamid, 348 g 2-Ethylhexylacrylat, 175 g Aceton und 0,5 g Dodecanthiol befüllt. Nach 45 Minuten Durchleiten mit Stickstoffgas unter Rühren wurde der Reaktor auf 58 °C hochgeheizt, anschließend wurden 0,2 g Azoisobutyronitril (AIBN) hinzugegeben. Nach einer Stunde Reaktionszeit wurden 0,2 g Vazo 52™ (Fa DuPont), nach 1,30 h 0,4 g Vazo 52™ und nach 2 h 0,6 g Vazo 52™ hinzugeben. Nach 2,5 h Reaktionszeit wurden wiederum 0,2 g Azoisobutyronitril (AIBN) hinzugegeben. Nach 4 h verdünnte man mit 175 g Aceton. Nach 24 und nach 36 erfolgte eine Zugabe von jeweils 0,4 g Perkadox 16™ (Fa. Akzo). Nach 48 h Reaktionszeit wurde die Polymerisation abgebrochen und auf Raumtemperatur abgekühlt. Das Polymerisat wurde mit den Testmethoden C und E analysiert.

### Beispiel 9

Ein für radikalische Polymerisationen konventioneller 2 L-Glasreaktor wurde mit 12 g Acrylsäure, 194 g 2-Ethylhexylacrylat, 194 g n-Butylacrylat, 175 g Aceton und 0,2 g Dithiobenzoesäurebenzylester befüllt. Nach 45 Minuten Durchleiten mit Stickstoffgas unter Rühren wurde der Reaktor auf 58 °C hochgeheizt, anschließend wurden 0,2 g Azoisobutyronitril (AIBN) hinzugegeben. Nach einer Stunde Reaktionszeit wurden 0,2 g Vazo 52™ (Fa DuPont), nach 1,30 h 0,4 g Vazo 52™ und nach 2 h 0,6 g Vazo 52™ hinzugeben. Nach 2,5 h Reaktionszeit wurden wiederum 0,2 g Azoisobutyronitril (AIBN) hinzugegeben. Nach 4 h verdünnte man mit 175 g Aceton. Nach 24 und nach 36 erfolgte eine Zugabe von jeweils 0,4 g Perkadox 16™ (Fa. Akzo). Nach 48 h Reaktionszeit wurde die Polymerisation abgebrochen und auf Raumtemperatur abgekühlt. Das Polymerisat wurde mit den Testmethoden C und E analysiert.

### Beispiel 10

Ein für radikalische Polymerisationen konventioneller 2 L-Glasreaktor wurde mit 12 g Acrylsäure, 194 g 2-Ethylhexylacrylat, 194 g n-Butylacrylat, 175 g Aceton und 0,5 g Dodecanthiol befüllt. Nach 45 Minuten Durchleiten mit Stickstoffgas unter Rühren wurde der Reaktor auf 58 °C hochgeheizt, anschließend wurden 0,2 g Azoisobutyronitril (AIBN) hinzugegeben. Nach einer Stunde Reaktionszeit wurden 0,2 g Vazo 52™ (Fa DuPont), nach 1,30 h 0,4 g Vazo 52™ und nach 2 h 0,6 g Vazo 52™ hinzugeben. Nach 2,5 h Reaktionszeit wurden wiederum 0,2 g Azoisobutyronitril (AIBN) hinzugegeben. Nach 4 h verdünnte man mit 175 g Aceton. Nach 24 und nach 36 erfolgte eine Zugabe von jeweils 0,4 g Perkadox 16™ (Fa. Akzo). Nach 48 h Reaktionszeit wurde die Polymerisation abgebrochen und auf Raumtemperatur abgekühlt. Das Polymerisat wurde mit den Testmethoden C und E analysiert.

### Beispiel 11

Ein für radikalische Polymerisationen konventioneller 2 L-Glasreaktor wurde mit 8 g Acrylsäure, 32 g t.-Butylacryat, 360 g 2-Ethylhexylacrylat, 175 g Aceton und 0,2 g Bis-2,2'-phenylethyl-thiocarbonat befüllt. Nach 45 Minuten Durchleiten mit Stickstoffgas unter Rühren wurde der Reaktor auf 58 °C hochgeheizt, anschließend wurden 0,2 g Azoisobutyronitril (AIBN) hinzugegeben. Nach einer Stunde Reaktionszeit wurden 0,2 g Vazo 52™ (Fa DuPont), nach 1,30 h 0,4 g Vazo 52™ und nach 2 h 0,6 g Vazo 52™ hinzugeben. Nach 2,5 h Reaktionszeit wurden wiederum 0,2 g Azoisobutyronitril (AIBN) hinzugegeben. Nach 4 h verdünnte man mit 175 g Aceton. Nach 24 und nach 36 erfolgte eine Zugabe von jeweils 0,4 g Perkadox 16™ (Fa. Akzo). Nach 48 h Reaktionszeit wurde die Polymerisation abgebrochen und auf Raumtemperatur abgekühlt. Das Polymerisat wurde mit den Testmethoden C und E analysiert.

### Beispiel 12

Ein für radikalische Polymerisationen konventioneller 2 L-Glasreaktor wurde mit 8 g Acrylsäure, 32 g t-Butylacryat, 360 g 2-Ethylhexylacrylat, 175 g Aceton und 0,5 g Dodecanthiol befüllt. Nach 45 Minuten Durchleiten mit Stickstoffgas unter Rühren wurde der Reaktor auf 58 °C hochgeheizt, anschließend wurden 0,2 g Azoisobutyronitril (AIBN) hinzugegeben. Nach einer Stunde Reaktionszeit wurden 0,2 g Vazo 52™ (Fa DuPont), nach 1,30 h 0,4 g Vazo 52™ und nach 2 h 0,6 g Vazo 52™ hinzugeben. Nach 2,5 h Reaktionszeit wurden wiederum 0,2 g Azoisobutyronitril (AIBN) hinzugegeben. Nach 4 h verdünnte man mit 175 g Aceton. Nach 24 und nach 36 erfolgte eine Zugabe von jeweils 0,4 g Perkadox 16™ (Fa. Akzo). Nach 48 h Reaktionszeit wurde die Polymerisation abgebrochen und auf Raumtemperatur abgekühlt. Das Polymerisat wurde mit den Testmethoden C und E analysiert.

### Beispiel 13

Ein für radikalische Polymerisationen konventioneller 2 L-Glasreaktor wurde mit 28 g Acrylsäure, 60 g Methylacryat, 312 g 2-Ethylhexylacrylat, 200 g Aceton und 0,2 g Bis-2,2'-phenylethyl-thiocarbonat befüllt. Nach 45 Minuten Durchleiten mit Stickstoffgas unter Rühren wurde der Reaktor auf 58 °C hochgeheizt, anschließend wurden 0,2 g Azoisobutyronitril (AIBN) hinzugegeben. Nach einer Stunde Reaktionszeit wurden 0,2 g Vazo 52™ (Fa DuPont), nach 1,30 h 0,4 g Vazo 52™ und nach 2 h 0,6 g Vazo 52™ hinzugeben. Nach 2,5 h Reaktionszeit wurden wiederum 0,2 g Azoisobutyronitril (AIBN) hinzugegeben. Nach 4 h verdünnte man mit 200 g Aceton. Nach 24 und nach 36 erfolgte eine Zugabe von jeweils 0,4 g Perkadox 16™ (Fa. Akzo). Nach 48 h Reaktionszeit wurde die Polymerisation abgebrochen und auf Raumtemperatur abgekühlt. Anschließend wurden 100 g der Haftklebemasse (bezogen auf den Feststoffanteil) mit 0,5 Gewichtsanteilen Aluminiumtriacetylacetonat gemischt und aus der Lösung auf einen mit einem Primer versehenden PET-Träger aufgetragen und für 10 Minuten bei 120 °C getrocknet. Der Masseauftrag betrug 50 g/m². Anschließend wurde klebtechnisch nach den Testmethoden A und B ausgewertet.

### Beispiel 14

Ein für radikalische Polymerisationen konventioneller 2 L-Glasreaktor wurde mit 40 g Acrylsäure, 360 g 2-Ethylhexylacrylat, 200 g Aceton und 0,2 g Bis-2,2'-phenylethyl-thio-carbonat befüllt. Nach 45 Minuten Durchleiten mit Stickstoffgas unter Rühren wurde der Reaktor auf 58 °C hochgeheizt, anschließend wurden 0,2 g Azoisobutyronitril (AIBN) hinzugegeben. Nach einer Stunde Reaktionszeit wurden 0,2 g Vazo 52™ (Fa DuPont), nach 1,30 h 0,4 g Vazo 52™ und nach 2 h 0,6 g Vazo 52™ hinzugeben. Nach 2,5 h Reaktionszeit wurden wiederum 0,2 g Azoisobutyronitril (AIBN) hinzugegeben. Nach 4 h verdünnte man mit 200 g Aceton. Nach 24 und nach 36 erfolgte eine Zugabe von jeweils 0,4 g Perkadox 16™ (Fa. Akzo). Nach 48 h Reaktionszeit wurde die Polymerisation abgebrochen und auf Raumtemperatur abgekühlt. Anschließend wurden 100 g der Haftklebemasse (bezogen auf den Feststoffanteil) mit 0,5 Gewichtsanteilen Aluminiumtriacetylacetonat gemischt und aus der Lösung auf einen mit einem Primer versehenden PET-Träger aufgetragen und für 10 Minuten bei 120 °C getrocknet Der Masseauftrag betrug 50 g/m². Anschließend wurde klebtechnisch nach den Testmethoden A und B ausgewertet.

### Resultate

Zur klebtechnischen Ausprüfung der Beispiele 1, 2 und 4, 5 und 6 wurden die Testmethoden A und B durchgeführt Die Beispiele wurden aus Lösung auf einen mit einem Vorstrich (Primer) versehenen PET-Träger aufgetragen, wobei nach dem Trocknen für 10 Minuten bei 120 °C der Massenauftrag 50 g/m² betrug. Anschließend wurden die Beispiele mit ES bei unterschiedlichen Dosen und einer Beschleunigungsspannung von 230 kV vemetzt (ES-Anlage der Fa. Crosslinking).

Die Ergebnisse der Polymerisationen sind in Tabelle 1 aufgelistet.

**Tabelle 1**

| Beispiel | M_{w} | PD | Umsatz |
|---|---|---|---|
| 1 | 488000 | 2.8 | 99,1 % |
| 2 | 685000 | 4,6 | 99,4 % |
| 3 | - | - | - |
| 4 | 585000 | 4.1 | 99,2 % |
| 5 | 527000 | 3.2 | 99,0 % |
| 6 | 446500 | 2,7 | 98,2 % |
| M_{w}: mittleres Molekuargewicht (Gewichtsmittel) [g/mol] PD: Polydispersität | | | |

Tabelle 1 belegt, daß eine Polymerisation in reinem Lösemittel (Beispiel 3) mit Problemen behaftet ist. Zum Erreichen eines hohen Umsatzes wird eine relativ große Menge Initiator benötigt, wobei nach bereits 4 h Reaktionszeit der Ansatz vergelt ist und die Polymerisation abgebrochen werden muß. Die Polymerisationen der Beispiele 1, 2 und 4 belegen, daß Regler die Vergelung verhindern und sich dennoch hohe Umsätze von > 98 % durch eine Initiierung in mehreren Stufen und mit mehreren Initiatoren realisieren lassen. Dennoch eignen sich Alkohole, wie z.B. Isopropanol, nur bedingt, da dieser Regler nicht in die Haftklebemasse eingebaut wird und somit im Lösemittel verbleibt. Zur Aufkonzentration zum Hotmelt muß im Niederdruck ein Lösemittelgemisch abdestilliert. Der Durchsatz wird hier durch einen sich verändernden Siedepunkt stark vermindert.
Thiole und Dithioester (Beispiele 1, 4, 5 und 6) werden dagegen während des Polymerisationsprozesses im Polymer eingebaut und beeinträchtigen nicht den Aufkonzentrationsprozeß. Neben diesen Kriterien ist ebenfalls das erzielbare mittlere Molekulargewicht und die Molekulargewichtsverteilung (Dispersität) von entscheidener Bedeutung für die klebtechnischen Eigenschaften. Die Beispiele 1, 5 und 6 belegen, daß Thioester die effizientesten Regler sind und somit die geringste Polydispersität für die entsprechende Polyacrylathaftklebemasse erreichen.
Der Einfluß der Polydispersität auf die klebtechnischen Eigenschaften ist in Tabelle 2 dargestellt.

**Tabelle 2**

| Beispiel | SSZ RT 10 N | KK-Stahl [N/cm] | ES-Dosis [kGy] |
|---|---|---|---|
| 1 | 4150 | 4,6 | 20 |
| 2 | 840 | 4,5 | 20 |
| 4 | 1070 | 4,7 | 20 |
| 5 | 3170 | 4,6 | 40 |
| 6 | 3950 | 4,8 | 40 |
| Masseauftrag: 50g/m². SSZ: Scherstandzeiten [min] KK: Klebkraft auf Stahl ES: Elektronenstrahlen | | | |

Mit dem Dithiobenzoesäurebenzylester wurde die höchste Scherfestigkeit im Vergleich zu den anderen Polymerisationsreglem erreicht. Da das mittlere Molekulargewicht im Vergleich zu den Referenzen mit 2 und 4 auf dem etwa identischen Niveau liegt, kann der positive Effekt der Kohäsionssteigerung der engen Molekulargewichtsverteilung zugeordnet werden.
Weiterhin belegen die Beispiele 5 und 6, daß auch mit niedrigerem mittleren Molekulargewicht durch die Thioesterregelung Acrylathaftklebemassen hergestellt werden können, die durch die engere Molekulargewichtsverteilung trotzdem noch scherfester sind als die konventionell geregelten Beispiele 2 und 4 mit höherem mittleren Molekulargewicht.

Der Einsatz der erfindungsgemäßen Regler soll im folgenden durch weitere Beispiele unterlegt werden.

Zur klebtechnischen Ausprüfung der Beispiele 7 - 12 wurden die Testmethoden A und B durchgeführt. Die Beispiele 7 - 12 wurden im Unterdruck bei erhöhten Temperaturen vom Lösemittel befreit und als Hotmelt bei etwa 135 °C aus der Schmelze durch eine Breitschlitzdüse der Fa. Pröls auf einen mit einem Vorstrich (Primer) versehenen PET-Träger mit 50 g/m² Masseauftrag aufgetragen. Zur Bestimmung der Fließviskosität wurde Testmethode D angewendet Anschließend wurden die Beispiele mit ES bei unterschiedlichen Dosen und einer Beschleunigungsspannung von 230 kV vemetzt (ES-Anlage der Fa. Crosslinking).

Die Ergebnisse der Polymerisationen sind in Tabelle 3 aufgelistet.

**Tabelle 3**

| Beispiel | M_{w} | PD | Umsatz |
|---|---|---|---|
| 7 | 465000 | 2.7 | 99,3 % |
| 8 | 702000 | 4,8 | 99,4 % |
| 9 | 485000 | 2.9 | 99,2 % |
| 10 | 698000 | 4,7 | 99,4% |
| 11 | 440000 | 2.8 | 99,3 % |
| 12 | 722000 | 4,7 | 99,2 % |
| M_{w}: mittleres Molekuargewicht (Gewichtsmittel) [g/mol] PD: Polydispersität | | | |

Tabelle 3 belegt, daß bei bedeutend niedrigerem mittleren Polymerisationsgrad die Polydispersität der mit Dithioester geregelten Acrylathaftklebemassen deutlich unterhalb der Thiol-geregelten Klebemassen liegt. Ebenfalls lassen sich Trithiocarbonate als effiziente Regler einsetzen (Beispiel 11). Der Umsatz liegt in allen Reaktionen durch die verschiedenen Initiierungsstufen mit AIBN, Vazo 52™ und Perkadox 16™ über 99 %. Zur klebtechnischen Beurteilung wurden die Muster aus der Schmelze beschichtet sowie durch Test D die Fließviskosität bestimmt. Die Ergebnisse hierzu sind in Tabelle 4 aufgelistet:

**Tabelle 4**

| Beispiel | SSZ (RT, 10 N) | KK-Stahl [N/cm] | η[Pa*s] bei 130 °C und 1 rad/s | ES-Dosis [kGy] |
|---|---|---|---|---|
| 7 | 8020 | 4,8 | 4800 | 50 |
| 8 | 3565 | 4,9 | 5800 | 50 |
| 9 | 4195 | 4,9 | 3900 | 50 |
| 10 | 1575 | 5,0 | 4900 | 50 |
| 11 | 2350 | 4,7 | 3000 | 40 |
| 12 | 1045 | 4,8 | 4100 | 40 |
| Masseauftrag: 50g/m² SSZ: Scherstandzeiten [min] KK: Klebkraft auf Stahl η: Fließviskosität nach Test D ES: Elektronenstrahlen | | | | |

Die Fließviskosität korreliert mit der Polydispersität der einzelnen Polyacrylate. Durch engere Molekulargewichtsverteilung und das niedrigere Molekulargewicht sinkt die Fließviskosität und die Haftklebemassen lassen sich dementsprechend bedeutend einfacher aus der Schmelze beschichten. Ein weiterer positiver Aspekt ist, daß die Dithioester oder Trithiocarbonat-geregelten Polymere im Schertest eine höhere Kohäsion gegenüber den Thiol-geregelten Massen aufweisen. Die Klebkräfte bleiben von der Molekulargewichtsverteilung nahezu unbeeinflußt.

Im folgenden werden die Ergebnisse der Beispiele 13 und 14 ausgewertet. In Tabelle 5 sind die klebtechnischen Eigenschaften einer aus Lösung mit einem Trithiocarbonat geregelten Acrylathaftklebemasse aufgetragen. Die Muster wurden thermisch mit einem Aluminium-chelat vemetzt. Die hohe Kohäsion der Klebemassen demonstriert, daß die erfindungsgemäßen Regler für konventionelle Polyacrylate zur Beschichtung aus der Lösung geeignet sind.

**Tabelle 5**

| Beispiel | SSZ (RT, 10 N) | KK-Stahl [N/cm] |
|---|---|---|
| 13 | +10000 | 3,9 |
| 14 | +10000 | 3,8 |
| Masseauftrag: 50g/m² SSZ: Scherstandzeiten [min] KK: Klebkraft auf Stahl | | |

## Patentansprüche

1. Verfahren zur Herstellung von Polyacrylaten, **dadurch gekennzeichnet, daß**
• das Monomerengemisch zur Herstellung der Polyacrylate zu mindestens 70 Gew.-%
aus mindestens einem acrylischen Monomeren der allgemeinen Formel 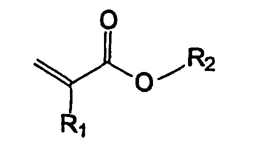 besteht, wobei R₁ = H oder CH₃ und R₂ = H oder eine Alkylkette mit 1 - 20 C-Atomen ist,
• die Monomere unter Anwesenheit zumindest eines radikalischen Initiators über eine freie radikalische Polymerisation mit zumindest einem Thioester als Polymerisationsregler polymerisiert werden,
• das mittlere Molekulargewicht der Polyacrylate im Bereich von 250.000 g/mol bis zu 1.000.000 g/mol liegt,
• die Molekulargewichtsverteilung der Polyacrylate M_{w}/Mₙ < 4 ist

2. Verfahren nach Anspruch 1, **dadurch gekennzeichnet, daß**
• als Reaktionslösung eine zumindest 50%ige Lösung der Monomere unter Zusatz des Initiators bzw. der Initiatoren und des Thioesters bzw. der Thioester eingesetzt wird,
• in einem Temperaturbereich von 50 °C bis 90 °C die radikalische Polymerisation durchgeführt wird,
• während der Polymerisation mindestens einmal mit einem Initiator für radikalische Polymerisationen mit geringer Tendenz zur Seitenkettenbildung (Pfropfwirksamkeit ε < 5 bei der aktuellen Reaktionstemperatur) nachinitiiert wird,
• gegebenenfalls die Reaktion durch Verdünnung der Reaktionslösung je nach Viskosität des Polymerisats gesteuert wird,
• eine kontrollierte Nachinitiierung mit bis zu 2 Gew.-%, bezogen auf das Monomerengemisch, eines Initiators mit erhöhter Tendenz zur Seitenkettenbildung (Pfropfwirksamkeit **ε** > 10 bei der aktuellen Reaktionstemperatur) stattfindet,
• die Polymerisation bis zu einem Umsatz > 90 %, bevorzugt > 95 % durchgeführt wird.

3. Verfahren nach einem der vorangehenden Ansprüche, **dadurch gekennzeichnet, daß** als Thioester Verbindungen der folgenden allgemeinen Strukturformel 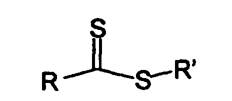 eingesetzt werden, wobei R und R' unabhängig voneinander gewählt sind und R ein Rest aus einer der Gruppen i) bis iv) und R' ein Rest aus einer der Gruppen i) bis iii) ist :
i) C₁-C₁₈-Alkyl-, C₂-C₁₈-Alkenyl-, C₂-C₁₈-Alkinyl-, jeweils linear oder verzweigt; Aryl-, Phenyl-, Benzyl-, aliphatische und aromatische Heterocyclen,
ii) -NH₂, -NH-R¹, -NR¹R², -NH-C(O)-R¹, -NR¹-C(O)-R², -NH-C(S)-R¹, -NR¹-C(S)-R², 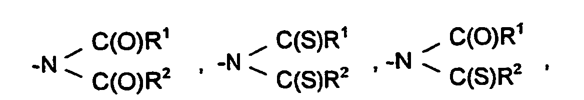 wobei R¹ und R² unabhängig voneinander gewählte Reste aus der Gruppe i) sind
iii) -S-R³, -S-C(S)-R³,
wobei R³ ein Rest gewählt aus einer der Gruppen i) oder ii) ist,
iv) -O-R³, -O-C(O)-R³,
wobei R³ ein Rest gewählt aus einer der Gruppen i) oder ii) ist.

4. Verfahren nach einem der vorangehenden Ansprüche, **dadurch gekennzeichnet, daß** das Monomerengemisch zu einem Anteil von bis zu 30 Gew.-% aus Vinylverbindungen besteht, insbesondere aus einer oder mehreren Vinylverbindungen gewählt aus der folgenden Gruppe:
Vinylester, Vinylhalogenide, Vinylidenhalogenide, Nitrile ethylenisch ungesättigter Kohlenwassserstoffe.

5. Verfahren nach einem der vorangehenden Ansprüche, **dadurch gekennzeichnet, daß** als Initiatoren, welche zu Beginn zu der Monomermischung gegeben werden, solche mit geringer Tendenz zur Ausbildung von Seitenketten (Pfropfwirksamkeit ε < 5 bei der jeweils vorliegenden Temperatur der Reaktionslösung) gewählt werden, und/oder die Initiatoren zu einem Anteil von 0,001 - 1 Gew.-%, bevorzugt von 0,05 Gew.-%, bezogen auf das Monomerengemisch, eingesetzt werden.

6. Verfahren nach einem der vorangehenden Ansprüche, **dadurch gekennzeichnet, daß** der Thioester mit einem Gewichts-Anteil von 0,001 % - 5 %, insbesondere von 0,025 % bis 0,25 %, bezogen auf das Monomerengemisch, eingesetzt wird, und/oder das molare Verhältnis von freiem radikalischen Initiator zu Thioester im Bereich von 50: 1 und 1 : 1, insbesondere zwischen 10 : 1 und 2 : 1 liegt.

7. Verfahren nach einem der vorangehenden Ansprüche, **dadurch gekennzeichnet, daß** das Polyacrylat nach einem der oberen Ansprüche aus der Lösung auf einen Träger oder auf ein Trägermaterial als Schicht aufgetragen wird.

8. Verfahren nach mindestens einem der oberen Ansprüche, **dadurch gekennzeichnet, daß** die derart hergestellten Polyacrylate zu einer Polyacrylatmasse aufkonzentriert werden, deren Lösungmittelgehalt ≤ 2 Gew.-% ist, und diese dann als Heißschmelzmasse als Schicht auf einen Träger oder auf ein Trägermaterial aufgetragen wird.

9. Verfahren nach einem der Ansprüche 4 oder 5, **dadurch gekennzeichnet, daß** die auf den Träger oder das Trägermaterial aufgetragene Polyacrylatschicht vemetzt wird, insbesondere durch thermische Behandlung.

10. Verwendung des nach einem der vorangehenden Ansprüche hergestellten Polyacrylates als Haftklebemasse.

11. Klebeband mit einer ein- oder beidseitig auf einem Träger aufgetragenen Polyacrylathaftklebemasse nach Anspruch 10.

## Claims

1. Process for preparing polyacrylates, **characterized in that**
• the monomer mixture for preparing the polyacrylates is composed of at least 70% by weight
of at least one acrylic monomer of the general formula 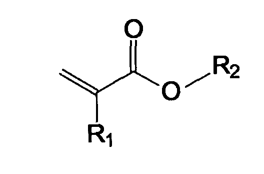
where R₁ is H or CH₃ and R₂ is H or an alkyl chain having 1 - 20 carbon atoms,
• the monomers are polymerized in the presence of at least one free-radical initiator by free-radical polymerization with at least one thioester as polymerization regulator,
• the average molecular weight of the polyacrylates is in the range from 250,000 g/mol to 1,000,000 g/mol, and
• the molecular weight distribution of the polyacrylates, M_{w}/Mₙ, is < 4.

2. Process according to Claim 1, **characterized in that**
• the reaction solution used is an at least 50% strength solution of the monomers with added initiator(s) and thioester(s),
• the free-radical polymerization is conducted within a temperature range from 50°C to 90°C,
• during the polymerization the batch is reinitiated at least once using a free-radical polymerization initiator with a low propensity to form side chains (grafting activity ε < 5 at the prevailing reaction temperature),
• if desired, the reaction is controlled by diluting the reaction solution according to the viscosity of the polymer,
• controlled reinitiation is carried out with up to 2% by weight, based on the monomer mixture, of an initiator with an increased propensity to form side chains (grafting activity ε > 10 at the prevailing reaction temperature), and
• the polymerization is conducted to a conversion > 90%, preferably > 95%.

3. Process according to either of the preceding claims, **characterized in that** the thioesters used comprise compounds of the following general structural formula: 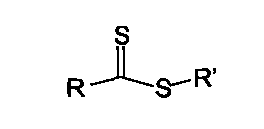 where R and R' are chosen independently of one another and R is a radical from one of groups i) to iv) and R' is a radical from one of groups i) to iii):
i) C₁-C₁₈ alkyl, C₂-C₁₈ alkenyl, C₂-C₁₈ alkynyl, in each case linear or branched; aryl, phenyl, benzyl, aliphatic and aromatic heterocycles,
ii) -NH₂, -NH-R¹, -NR¹R², -NH-C(O)-R¹, -NR¹-C(O)-R², -NH-C(S)-R¹, -NR¹-C(S)-R², 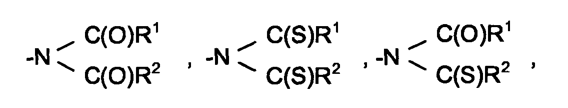 where R¹ and R² are independently chosen radicals from the group i)
iii) -S-R³, -S-C(S)-R³,
where R³ is a radical chosen from one of groups i) and ii),
iv) -O-R³, -O-C(O)-R³,
where R³ is a radical chosen from one of groups i) and ii).

4. Process according to any of the preceding claims, **characterized in that** the monomer mixture is composed of up to 30% by weight of vinyl compounds, in particular one or more vinyl compounds chosen from the following group:
vinyl esters, vinyl halides, vinylidene halides, nitriles of ethylenically unsaturated hydrocarbons.

5. Process according to any of the preceding claims, **characterized in that** the initiators which are added at the beginning to the monomer mixture are those with little propensity to form side chains (grafting activity ε < 5 at the prevailing temperature of the reaction solution) and/or the initiators are used in a fraction of 0.001 - 1% by weight, preferably of 0.05% by weight, based on the monomer mixture.

6. Process according to any of the preceding claims, **characterized in that** the thioester is used with a weight fraction of 0.001% - 5%, in particular from 0.025% to 0.25%, based on the monomer mixture, and/or the molar ratio of free-radical initiator to thioester is in the range from 50 : 1 to 1 : 1, in particular between 10 : 1 and 2 : 1.

7. Process according to any of the preceding claims, **characterized in that** the polyacrylate as defined in one of the above claims is applied from solution as a film to a support or to a backing material.

8. Process according to at least one of the above claims, **characterized in that** the polyacrylates thus prepared are concentrated to give a polyacrylate composition whose solvent content is ≤ 2% by weight, which is then applied as a hotmelt composition, as a film, to a support or to a backing material.

9. Process according to either of Claims 4 and 5, **characterized in that** the polyacrylate film applied to the support or the backing material is crosslinked, in particular by thermal treatment.

10. Use of the polyacrylate prepared according to any of the preceding claims as a pressure sensitive adhesive.

11. Adhesive tape comprising a polyacrylate pressure sensitive adhesive according to Claim 10, applied to one or both sides of a support.

## Revendications

1. Procédé pour la préparation de polyacrylates,
**caractérisé en ce que**
• le mélange de monomères pour la préparation des polyacrylates est constitué à raison d'au moins 70% en poids d'au moins un monomère acrylique de formule générale 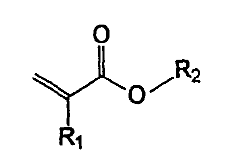
où R¹ = H ou CH₃ et R² = H ou une chaîne alkyle comprenant 1 à 20 atomes de carbone,
• les monomères sont polymérisés en présence d'au moins un initiateur radicalaire via une polymérisation radicalaire libre avec au moins un thioester comme régulateur de polymérisation,
• le poids moléculaire des polyacrylates se situe dans la plage de 250000 g/mole à 1000000 g/mole,
• la répartition des poids moléculaires des polyacrylates M_{w}/Mₙ < 4.

2. Procédé selon la revendication 1, **caractérisé en ce que**
• comme solution réactionnelle, on utilise une solution à au moins 50% des monomères, avec addition de l'initiateur ou des initiateurs et du thioester ou des thioesters,
• la polymérisation radicalaire est réalisée dans une plage de température de 50°C à 90°C,
• pendant la polymérisation, on post-initie au moins une fois avec un initiateur pour les polymérisations radicalaires avec une faible tendance à la formation de chaînes latérales (activité de greffage ε < 5 à la température de réaction en vigueur),
• le cas échéant, la réaction est contrôlée par dilution de la solution réactionnelle en fonction de la viscosité du polymère,
• une post-initiation contrôlée a lieu avec jusqu'à 2% en poids, par rapport au mélange de monomères, d'un initiateur avec une tendance plus élevée à la formation de chaînes latérales (ε > 10 à la température de réaction en vigueur),
• la polymérisation étant réalisée jusqu'à un rendement > 90%, de préférence > 95%.

3. Procédé selon l'une quelconque des revendications précédentes, **caractérisé en ce qu'**on utilise comme thioesters des composés de la formule de structure suivante 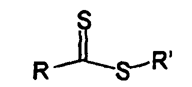 dans laquelle R et R' sont choisis indépendamment l'un de l'autre et R représente un radical d'un des groupes
i) à iv) et R' représente un radical d'un des groupes i) à iii):
i) alkyle en C₁ à C₁₈, alcényle en C₂ à C₁₈, alcynyle en C₂ à C₁₈, à chaque fois linéaires ou ramifiés ; les cycles aryle, phényle, benzyle, les hétérocycles aliphatiques et aromatiques,
ii) -NH₂, -NH-R¹, -NR¹R², -NH-C(O)-R¹, -NR¹-C(O)-R², -NH-C(S)-R¹, -NR¹-C(S)-R², 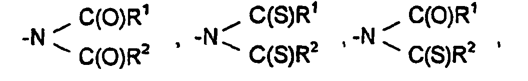 où R¹ et R² sont des radicaux choisis indépendamment l'un de l'autre dans le groupe i),
iii) -S-R³, -S-C(S)-R³,
où R³ est un radical choisi dans un des groupes i) ou ii),
iv) -O-R³, -O-C(O)-R³,
où R³ est un radical choisi dans un des groupes i) ou ii).

4. Procédé selon l'une quelconque des revendications précédentes, **caractérisé en ce que** le mélange de monomères est constitué à raison d'une proportion allant jusqu'à 30% en poids par des composés de vinyle, en particulier un ou plusieurs composés de vinyle choisis dans le groupe suivant : esters de vinyle, halogénures de vinyle, halogénures de vinylidène, nitriles d'hydrocarbures éthyléniquement insaturés.

5. Procédé selon l'une quelconque des revendications précédentes, **caractérisé en ce qu'**on choisit comme initiateurs qui sont ajoutés au début au mélange de monomères ceux présentant une faible tendance à la formation de chaînes latérales (activité de greffage ε < 5 à la température en vigueur de la solution réactionnelle), et/ou
on utilise les initiateurs à raison d'une proportion de 0,001 à 1% en poids, de préférence de 0,05% en poids, par rapport au mélange de monomères.

6. Procédé selon l'une quelconque des revendications précédentes, **caractérisé en ce que** le thioester est utilisé en une proportion pondérale de 0,001% à 5%, en particulier de 0,025% à 0,25%, par rapport au mélange de monomères, et/ou le rapport molaire d'initiateur radicalaire libre à thioester se situe dans la plage de 50 : 1 et 1 : 1, en particulier entre 10 : 1 et 2 : 1.

7. Procédé selon l'une quelconque des revendications précédentes, **caractérisé en ce que** le polyacrylate selon l'une quelconque des revendications ci-dessus est appliqué à partir d'une solution sous forme de couche sur un support ou un matériau support.

8. Procédé selon l'une quelconque des revendications ci-dessus, **caractérisé en ce que** les polyacrylates ainsi préparés sont concentrés en une masse de polyacrylate dont la teneur en solvant ≤2% en poids et celle-ci est ensuite appliquée sous forme de masse fondue à chaud sous forme de couche sur un support ou un matériau support.

9. Procédé selon l'une quelconque des revendications 4 ou 5, **caractérisé en ce que** la couche de polyacrylate appliquée sur le support ou le matériau support est réticulée, en particulier par un traitement thermique.

10. Utilisation du polyacrylate préparé selon l'une quelconque des revendications précédentes comme masse auto-adhésive.

11. Bande adhésive présentant une masse auto-adhésive de polyacrylate selon la revendication 10 appliquée d'un côté ou des deux côtés sur un support.
